Europäisches Patentamt

European Patent Office

Office européen des brevets

(19)

(11) Veröffentlichungsnummer : **0 080 120**
**B1**

## EUROPÄISCHE PATENTSCHRIFT

(12)

(45) Veröffentlichungstag der Patentschrift :
26.03.86

(21) Anmeldenummer : 82110416.3

(22) Anmeldetag : 11.11.82

(51) Int. Cl.⁴ : **B 29 C 53/38**, B 31 F   1/00//
**A22C13/00**

(54) **Vorrichtung zur Bildung eines Schlauches aus einer flachen Bahn.**

(30) Priorität : 20.11.81 DE 3145967

(43) Veröffentlichungstag der Anmeldung :
01.06.83 Patentblatt 83/22

(45) Bekanntmachung des Hinweises auf die Patenterteilung : 26.03.86 Patentblatt 86/13

(84) Benannte Vertragsstaaten :
**AT BE CH DE FR GB IT LI LU NL SE**

(56) Entgegenhaltungen :
**BE-A-   630 355**
**FR-A- 2 275 301**
**GB-A-   696 864**
**GB-A-   881 638**
**US-A- 2 285 263**

(73) Patentinhaber : **HOECHST AKTIENGESELLSCHAFT**
**Postfach 80 03 20**
**D-6230 Frankfurt am Main 80 (DE)**

(72) Erfinder : **Heyse, Klaus, Ing. grad.**
**Kelkheimer-Strasse 10**
**D-6232 Bad Soden (DE)**
Erfinder : **Andrä, Klaus, Dr.**
**Konrad-Adenauer-Strasse 10**
**D-6501 Zornheim (DE)**

**Beschreibung**

Die Erfindung bezieht sich auf eine Vorrichtung zur Bildung eines Schlauches aus einer flachen Bahn von der im Oberbegriff des Anspruchs genannten Art Beschreibung.

Zur Herstellung eines Schlauches aus einer flachen Bahn werden üblicherweise Falthilfen in Form von Formschultern oder Formköpfen (DE-A-30 13 320) verwendet, durch welche die Bahn gebogen und gefaltet wird, so daß die beiden Ränder der Bahn sich nähern und die Randzonen sich überlappen. Durch Verklebung der sich überlappenden Randzonen wird ein Schlauch mit einer Längsnaht gebildet. Es ist auch möglich, die beiden Randzonen mit einem Folienstreifen miteinander zu verbinden, wobei die Randzonen sich nicht notwendigerweise überlappen müssen. Diese bekannten Falthilfen zeigen den Nachteil, daß die Breite des Überlappungsbereiches und somit auch der Umfang des gebildeten Schlauches nicht besonders genau gesteuert werden kann. Bei Formschultern wird außerdem das Bahnmaterial wegen der auf kurzem Wege erfolgenden Umlenkung der Bahn an dem Kragenrand der Formschulter erheblich mechanisch beansprucht, wobei hohe Reibungskräfte zu überwinden sind.

Nach der US-A-2 148 884 wird ein im Innern des geformten Schlauches angeordneter Dorn zur Abstützung verwendet, während von außen eine Rolle angepreßt wird. Diese Falthilfen gewährleisten keine exakte Führung der sich überlappenden Randzonen der Bahn, so daß der gebildete Schlauch keinen gleichmäßigen Umfang zeigen kann. Die aus der US-A-2 856 742 bekannte Formeinrichtung besteht aus zwei einander gegenüberliegenden Formteilen, die sich bogenförmig jeweils auf eine Randzone der Bahn von außen anlegen. Beide Formteile sind im Abstand zueinander in Richtung der Schlauchfortbewegung angeordnet. Diese bekannte Formeinrichtung ist für solche Bahnen, die bereits vor der Schlauchformung auf einer Randzone einen Klebstoff aufweisen, nicht geeignet. Die sich überlappenden Randzonen sind nur im Bereich zwischen den beiden Formteilen voneinander getrennt, so daß Gefahr besteht, daß die Randzonen bereits vor dem Passieren des ersten Formteils miteinander verkleben.

Aus der US-A-2 285 263 ist eine Einrichtung zur Schlauchformung bekannt, bei der die Bahn von innen und außen abgestützt und an ihren Rändern geführt wird. Das zur äußeren Abstützung der Bahn vorgesehene Mittel ist ein gewölbter Metallkörper, der gleichzeitig die Funktion hat, die Bahnränder in einem schraubenförmigen Verlauf einander zu nähern. Auch diese Falthilfe zeigt den Nachteil, daß das Bahnmaterial stark mechanisch beansprucht wird, da die Bahn bei der Schlauchformung bereits vor der Überlappung ihrer Ränder durch den Metallkörper gezwungen wird, eine vorgeschriebene Form einzunehmen.

Es ist deshalb Aufgabe der Erfindung, eine Vorrichtung anzugeben, die eine möglichst reibungsfreie, genaue Führung der Randzonen der Bahn bei der Schlauchformung bis zur Bildung der Klebenaht ermöglicht. Die Vorrichtung soll das Verdrehen der Bahnkanten verhindern und ihren geradlinigen Lauf ermöglichen. Die Abweichungen von einem mittleren Umfang des gebildeten Schlauches sollen verringert und die Möglichkeit von Fehlern im Bereich der Verklebung soll nahezu ausgeschlossen werden.

Diese Aufgabe wird gelöst durch die im Anspruch angegebene Vorrichtung.

Unter einer flachen Bahn sind Folien, Filme oder rechteckige Zuschnitte zu verstehen, die aus Kunststoff, Geweben, Vliesstoffen oder Metall wie Aluminium bestehen. Insbesondere besteht die Bahn aus Cellulose, d. h. Zellglas, regenerierter Cellulose oder Cellulosehydrat, aus Cellulosederivaten wie Celluloseether, aus Stärke und Stärkederivaten oder aus Eiweißstoffen. Cellulosebahnen können bekanntlich hergestellt werden aus Viskose durch Koagulation, aus Cellulosenitrat durch Denitrierung oder aus Celluloseester durch Hydrolyse. Es ist auch möglich, Bahnen, die mit einer Fasereinlage verstärkt sind, zu einem Schlauch zu formen. Beispielsweise wird zur Herstellung dieser Bahn eine Papierbahn ein- oder beidseitig mit Viskose beschichtet und die Viskose durch Koagulation in regenerierte Cellulose übergeführt.

Die Vorrichtung ist insbesondere für solche Bahnen geeignet, die bereits vor dem Beginn der Überlappung der Randzonen miteinander an einer oder an beiden Randzonen eine Klebstoffschicht aufweisen oder selbstklebrig sind (DE-A-30 13 320), denn in diesem Fall bietet die Vorrichtung den Vorteil, daß nicht bereits zu Beginn der Überlappung ein Kontakt Randzone mit Randzone eintreten kann. Der Auftrag der Klebstoffschicht erfolgt z. B. in Form einer Dispersion oder Lösung mit Antragswalzen oder Düsen. Es ist auch möglich, die Klebstoffschicht mit einem Trägerband zu übertragen, das anschließend abgezogen wird. Im Fall der Verwendung von Lösungs- oder Dispersionsmittel für den Klebstoff werden diese vor, während oder nach der Bildung der Klebenaht durch Einwirkung von Wärme entfernt.

Es ist auch möglich, die Oberfläche der Bahn im Bereich der Randzonen durch geeignete Lösungsmittel anzulösen und dadurch klebrig zu machen. Als Klebstoff kommen ferner auch thermoplastische Harze in Betracht, die bei Anwendung von Druck und Wärme siegelfähig sind (US-A-2 773 773) oder Lösungen von wasserlöslichen kationischen Harzen, die nach ihrer Härtung eine wasserunlösliche Klebenaht bilden (US-A-2 607 696).

Ferner weist die Bahn zweckmäßigerweise eine Schicht aus einem Verankerungsmittel auf, die als haftvermittelnde Schicht vor dem Klebstoffauftrag auf eine oder beide Klebflächen, oder sogar auf die gesamte Bahnfläche aufgebracht wird, um die Haftung zwischen Klebstoff und Klebflächen zu verbessern.

Ferner kann die Bahn, je nach dem Verwendungszweck des gebildeten Schlauches, übliche Beschichtungen auf den die späteren Innen- und Außenseiten des Schlauches bildenden Oberflächen aufweisen. Wird der Schlauch z. B. als künstliche Wursthülle verwendet, so können an sich bekannte Mittel zur Verbesserung der Schälbarkeit der Schlauchhülle, Farbstoffe, eine gasundurchlässige Kunststoffschicht, wasserabstoßende Harze oder Bedruckungen auf die Bahnoberfläche(n) aufgebracht werden.

Die zur Fortbewegung der Bahn vorgesehenen Mittel bestehen aus üblichen Walzen bzw. Walzenpaaren oder Kluppen, die die Bahn an ihren beiden Längskanten ergreifen und in Bahnlängsrichtung fördern, gegebenenfalls auch die Bahn biegen und falten. Sie sind vor und/oder nach den Mitteln zur Schlauchformung angeordnet.

Der erfindungswesentliche Teil ist der flexible Streifen, der im Querschnitt gebogen ist. Er besteht aus einem Kunststoff mit guten Schlupfeigenschaften gegenüber dem Bahnmaterial bzw. der Klebstoffschicht oder zeigt einen Überzug aus diesem Material. Die Querschnittskrümmung ist infolge der Flexibilität des flexiblen Streifens dem Schlauchumfang anpaßbar. Es ist auch möglich, die Breite des flexiblen Streifens so groß zu wählen, daß in Verbindung mit einer im Querschnitt relativ kleinen Innenbohrung des Formkörpers eine spiralige Querschnittsform des flexiblen Streifens resultiert. Wegen seiner Krümmung ist der flexible Streifen in Längsrichtung relativ steif im Vergleich zur Querrichtung. Der flexible Streifen ist in Bahnlängsrichtung angeordnet. Sein erstes Ende ragt aus dem geformten Schlauch in Richtung zur noch flachen Bahn heraus, sein zweites Ende befindet sich im Überlappungsbereich der Bahnkanten, d. h. der Streifen erstreckt sich bis in den geformten Schlauch. Vorzugsweise direkt im Anschluß an den Streifen folgt ein Mittel zur Verbindung der sich überlappenden Randzonen der Bahn unter Bildung einer Klebenaht, z. B. ein Mittel zur Wärmesiegelung, zur Härtung der als Klebstoff dienenden Harze oder zum Anpressen der Randzonen gegeneinander, wenn beispielsweise ein Haftklebstoff verwendet wird. Diese Mittel zur Ausbildung der Klebenaht umfassen somit Siegelstationen, Heizelemente oder Anpreßwalzen, die je nach verwendetem Klebstoff ausgewählt und eingestellt werden.

Sofern der Schlauch unmittelbar nach Bildung der Klebenaht mit Füllgut gefüllt werden soll, wird das Füllrohr einer Vorrichtung in den Schlauch in Bahnfortbewegungsrichtung eingeführt, wobei sich die Füllrohröffnung nach dem Mittel zur Herstellung der Klebenaht befindet. Das Füllgut wird unter Druck oder unter der Wirkung der Schwerkraft in den Schlauch eingebracht. Gegebenenfalls kann in diesem Fall eine weitere, nachgeordnete Einrichtung zur Portionierung gefüllter Abschnitte, z. B. eine Einrichtung zum Clippen oder eine Siegelstation, die die gefüllten Abschnitte quer zur Transportrichtung versiegelt, und anschließend eine Schneideeinrichtung zum Abtrennen der gefüllten Abschnitte angeordnet werden.

Der flexible Streifen weist entlang einer seiner beiden Längskanten oder entlang beider Längskanten abstehende Ränder auf, mit denen eine oder beide Längskanten der gefalteten Bahn geführt werden. In bevorzugter Ausführungsform stehen die Ränder des flexiblen Streifens in radialer Richtung zum Schlauch ab.

Als zusätzliches Mittel zur Schlauchformung ist ein Formkörper mit im Querschnitt im wesentlichen kreisförmiger Innenbohrung im Bereich der Überlappung der Randzonen der Bahn angeordnet, insbesondere im Bereich der vollständigen Überlappung, wobei der geformte Schlauch durch die Innenbohrung des Formkörpers geführt und infolgedessen auf seiner Außenfläche abgestützt wird. Der Querschnitt der Innenbohrung ist das Maß für das Kaliber und die Form des herzustellenden Schlauchs. Zweckmäßigerweise bildet die Innenbohrung einen im wesentlichen kreiszylinderförmigen Hohlraum, der auch schwach elliptische Formen miteinschließt. Der Einfachheit halber wird nur der Begriff kreisförmig bzw. kreiszylinderförmig verwendet. Die Wandung der Innenbohrung besteht vorteilhaft aus einem Material mit guten Gleiteigenschaften gegenüber dem Bahnmaterial, z. B. aus Polytetrafluorethylen, so daß ein guter Schlupf beim Durchführen des Schlauches durch die Innenbohrung gewährleistet ist.

Zusätzlich zu dem Formkörper mit Innenbohrung wird ein im wesentlichen kreiszylinderförmiger Innendorn verwendet. Der Innendorn befindet sich im Innern des geformten Schlauches, in einem Bereich des Schlauches, wo sich die Randzonen der Bahn miteinander überlappen oder beginnen, sich zu überlappen, in jedem Fall aber im Bereich des Schlauches, wo eine vollständige Überlappung eingetreten ist. Der Innendorn befindet sich im Bereich der Innenbohrung des Formkörpers oder erstreckt sich zumindest mit einem Teil seiner Länge bis in die Innenbohrung. Der Innendorn ist zweckmäßigerweise « schwimmend » angeordnet, d. h. er kann seine Lage in Querrichtung zur Schlauchfortbewegung verändern. Zu diesem Zweck wird der Innendorn beispielsweise an seiner einen Stirnseite an einem Ende eines Stabes oder Drahtes befestigt, dessen anderes Ende in Richtung zur flachen Bahn aus dem geformten Schlauch herausragt und z. B. an einer Halterung fixiert ist. Der Stab oder Draht ist aufgrund seines Materials oder seiner Dicke in Querrichtung zur Bahnfortbewegung federnd und stellt sich selbständig nach einer Ablenkung quer zur Bahnlängsachse in seine Ausgangslage zurück. In der Ausgangslage ist die durch den Mittelpunkt des Querschnitts des Innendorns verlaufende Längsachse vorzugsweise gleich der Längsachse des Formkörpers, die durch den Mittelpunkt des Querschnitts seiner Innenbohrung verläuft.

Im ringförmigen Spalt, gebildet aus der Außenfläche des Innendorns und Innenfläche der Innenbohrung des Formkörpers, befindet sich der flexible Streifen, der mit seinem abstehenden Rand bzw. mit seinen abstehenden Rändern an der Außenfläche des Innendorns und/oder Innenfläche der Innenbohrung befestigt ist, z. B. in einem Schlitz, einer Rille oder einer Nut auf den Flächen des Innendorns bzw. der Innenbohrung. Es ist auch möglich, den flexiblen Streifen ausschließlich oder zusätzlich an seinem ersten, aus dem geformten Schlauch in Richtung zur flachen Bahn herausragendem Ende an einer Halterung zu befestigen.

Das Verfahren wird vorzugsweise kontinuierlich durchgeführt. Es wird anhand der in den Figuren dargestellten Ausführungsformen für die Vorrichtung näher erläutert. Insbesondere werden durch die Figuren verschiedene Variationsmöglichkeiten für die abstehenden Ränder des flexiblen Streifens erläutert, ohne daß sich die Erfindung auf diese Ausführungsformen beschränkt.

In Figur 1 ist eine Ausführungsform der Vorrichtung in Seitenansicht, zum Teil im Schnitt dargestellt, bei welcher der gebildete Schlauch überlappende Randzonen der Bahn aufweist,

In Figur 2a sind die erfindungswesentlichen Teile der in Fig. 1 gezeigten Vorrichtung vergrößert dargestellt,

Figuren 2b und 2c zeigen weitere Möglichkeiten für die Anordnung des flexiblen Streifens zwischen Formkörper und Innendorn,

Figur 3 zeigt die Vorrichtungteile der Fig. 2a im Schnitt entlang der Linie III-III,

Figur 4 zeigt eine Variante der Vorrichtung der Fig. 1, wobei die Klebstoffschicht durch einen Folienstreifen aufgebracht wird, Fig. 4a zeigt die Vorrichtung der Fig. 4 in der Draufsicht.

Figuren 5, 6 und 7 zeigen weitere Ausführungsformen der in Fig. 2 dargestellten Vorrichtungteile im Schnitt entlang der Linie III-III, mit denen die Randzonen der Bahn zur gegenseitigen Überlappung gebracht werden,

Figuren 5a bis 7a zeigen Ausführungsformen von Schläuchen im Schnitt, die mit den Vorrichtungteilen der jeweils entsprechenden Fig. 5 bis 7 hergestellt wurden.

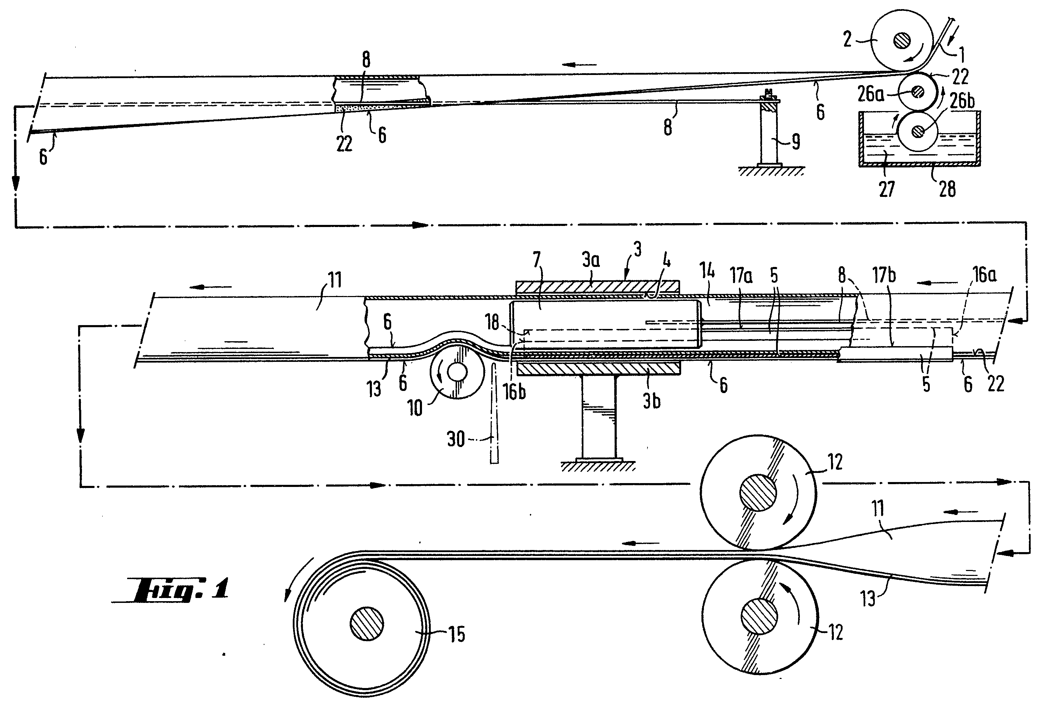

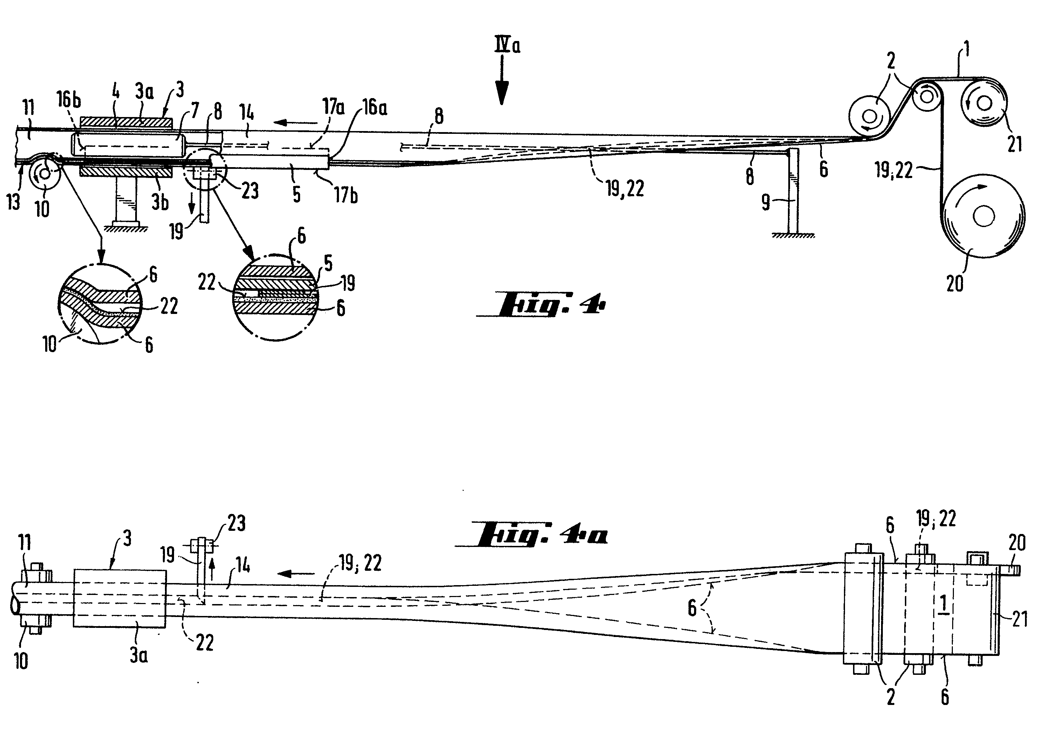

In Fig. 1 wird eine flache Bahn 1 über eine Umlenk- und Leitwalze 2 einem Formkörper 3 mit im Querschnitt kreisförmiger Innenbohrung 4 zugeführt. Der Auftrag der Klebstoffschicht 22 im Bereich einer Randzone 6 der Bahn 1 erfolgt mit der aus den Walzen 26a und 26b sowie der Klebstoffdispersion oder Klebstofflösung 27 enthaltenden Wanne 28 bestehenden Einrichtung. Der flexible Streifen 5 ist zwischen den sich überlappenden Randzonen 6 der Bahn 1 angeordnet (Fig. 3). Im Bereich der Innenbohrung 4 befindet sich ein zylinderförmiger Innendorn 7, der über einen Draht 8 an einer Halterung 9 befestigt ist. Die Randzonen 6 sind im Innern des Formkörpers 3 vollständig überlappt. Nach einer Kontaktrolle 10, die auf die Verklebungsnaht Druck ausübt, erreicht der eine Klebenaht 13 aufweisende Schlauch 11 ein angetriebenes Walzenpaar 12, welches den Schlauch 11 transportiert und flachlegt, und wird auf die Rolle 15 aufgewickelt.

Es ist auch möglich, den Klebstoff mittels eines Düsenkörpers 30 in den Überlappungsbereich der Randzonen 6 unmittelbar vor der Kontaktrolle 10 einzuführen.

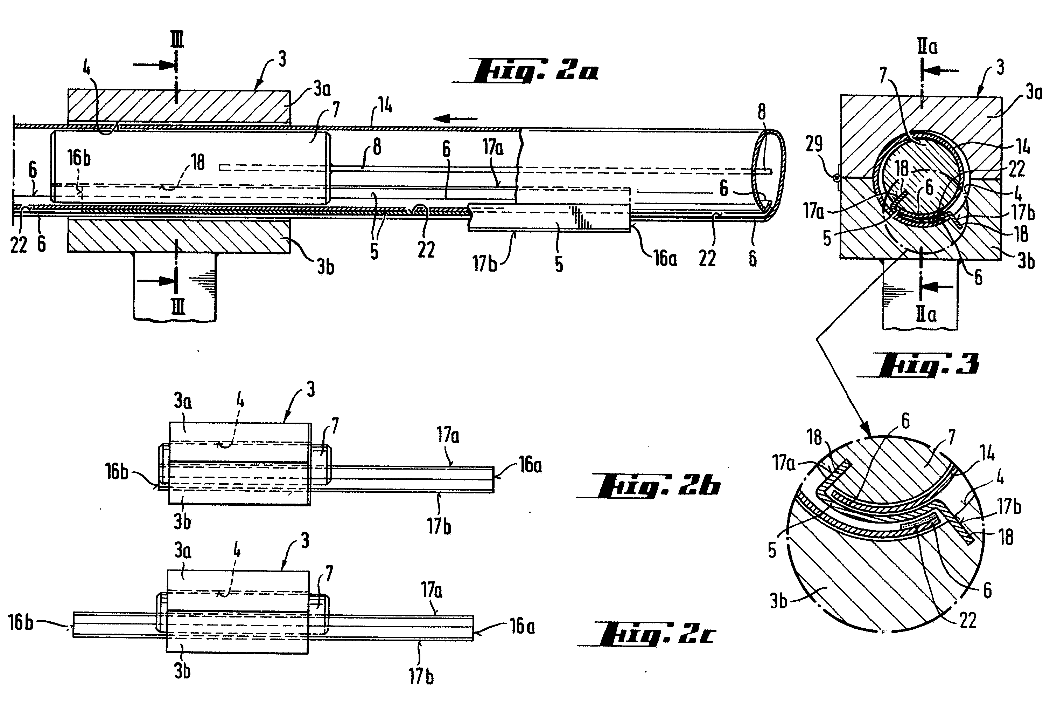

In Fig. 2a, 2b, 2c und 3 wird der Formkörper 3 mit Innenbohrung 4 z. T. vergrößert (Fig. 2a und Fig. 3) dargestellt. Er besteht aus zwei zusammengefügten Hälften 3a und 3b. Im Innern des Formkörpers 3 befindet sich der an dem Draht 8 befestigte Innendorn 7. Der flexible Streifen 5 ist mit seinen abstehenden Rändern 17a und 17b am Innendorn 7 bzw. an der Innenbohrung 4 des Formkörpers 3 befestigt. Das erste Ende 16a des flexiblen Streifens 5 ragt in Richtung zur flachen Bahn aus der Innenbohrung 4 des Formkörpers 3 heraus und befindet sich vor dem Beginn des Überlappungsbereiches. Die beiden Randzonen 6 der zu einem Schlauch 14 geformten Bahn 1 werden durch die beiden abstehenden Ränder 17a und 17b des flexiblen Streifens 5 entlang einer parallel zur Fortbewegungsrichtung sich erstreckenden Geraden geführt. Die Ränder 17a und 17b sind in Rillen 18 auf der Umfangsfläche des Innendorns 7 und auf der Fläche der Innenbohrung befestigt. Die Randzonen 6 der Bahn 1 werden durch den flexiblen Streifen 5 im Abstand zu einander gehalten und treten erst dann miteinander in Kontakt, wenn die Bahn das zweite Ende 16b des flexiblen Streifens 5 erreicht hat. Dieses zweite Ende 16b befindet sich in der Ausführungsform der Fig. 2a noch innerhalb der Innenbohrung 4. Es ist auch möglich, daß das zweite Ende 16b am Ausgang der Innenbohrung 4 angeordnet ist (Fig. 2b) oder sich sogar bis kurz vor die Kontaktrolle 10 erstreckt (Fig. 2c).

In Fig. 4 und 4a werden die gleichen Bezugsziffern für gleiche Vorrichtungteile wie in den vorhergehenden Figuren verwendet. Von einer Rolle 21 wird die Bahn 1 und von einer Rolle 20 wird ein Folienstreifen 19 mit Klebstoffschicht 22 abgewickelt und mit Umlenkrollen 2 in Richtung der Bahnfortbewegung geführt. Die Klebstoffschicht 22 wird zunächst auf die eine Randzone 6 der Bahn 1 aufgebracht, danach der als Schutz- und Trennpapier dienende Folienstreifen 19 tangential abgezogen und durch die Rolle 23 umgelenkt. Der flexible Streifen 5, welcher den gleichen Querschnitt wie in den vorherigen Figuren aufweist, verhindert einen Kontakt zwischen der Klebstoffschicht 22, von der der Folienstreifen 19 abgezogen ist, und der überlappenden klebstoff-freien Randzone der Bahn 1.

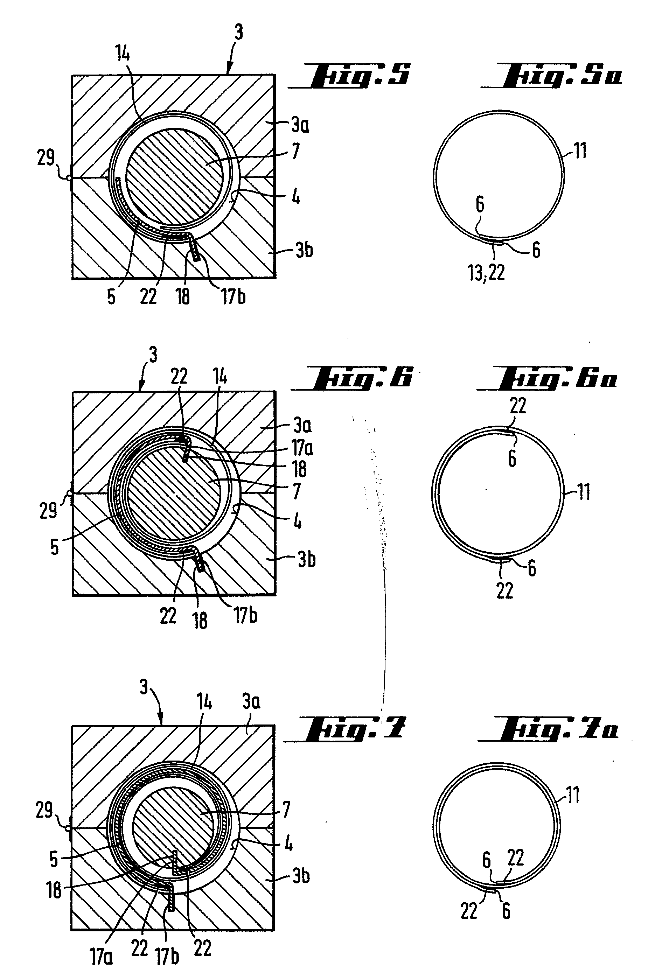

In Fig. 5 zeigt der flexible Streifen 5 nur einen wegstehenden Rand 17b, der an der Innenbohrung 4 des Formkörpers 3 in einer Rille oder Nut 18 befestigt ist. Der in Fig. 5a dargestellte Querschnitt des verklebten Schlauchs 11 mit der Klebenaht 13 ergibt sich auch mit den in Fig. 3 gezeigten Vorrichtungteilen. Mit 29 ist ein Gelenk bezeichnet, das zum Aufklappen des Teils 3a des Formkörpers 3 dient.

In Fig. 6 und 7 zeigt der flexible Streifen 5 zwei abstehende Ränder 17a und 17b, welche am Innendorn 7 bzw. an der Innenbohrung 4 des Formkörpers 3 befestigt sind. Durch die relativ große Breite des flexiblen Streifens 5 resultiert eine weitergehende Überlappung der Randzonen der in den Fig. 6a und 7a im Querschnitt dargestellten Schläuche 11 im Vergleich zu dem in der Fig. 5a gezeigten Schlauchquerschnitt.

Die in den Fig. 5a, 6a und 7a dargestellten Schläuche zeigen überlappende Randzonen 6.

## Patentansprüch

Vorrichtung zur Herstellung eines Schlauches (11) aus einer flachen Bahn (1) unter Bildung einer überlappten Längsnaht, umfassend einen Formkörper (3) mit einer im Querschnitt im wesentlichen kreisförmigen Innenbohrung (4) zur äußeren Abstützung des geformten Schlauchs (14) im Bereich der gegenseitigen Überlappung der Randzonen (6) der Bahn (1) und einen im wesentlichen kreiszylinderförmigen Innendorn (7), angeordnet zumindest mit einer Teillänge im Innern des Formkörpers (3), zur inneren Abstützung des geformten Schlauchs (14) sowie ein Mittel zur Führung und Abstandshaltung der Bahnkanten, dadurch gekennzeichnet, daß dieses Mittel aus einem flexiblen Streifen (5) besteht, dieser Streifen eine im Querschnitt gebogene, in seiner Krümmung dem Schlauchumfang anpaßbare Form mit einem oder zwei abstehenden Rändern (17a,b) an den Längskanten aufweist, daß der Rand bzw. die Ränder (17a,b) sich geradlinig parallel zur Fortbewegungsrichtung der Bahn (1) erstrecken und in Richtung zur Innenbohrung (4) und/oder zum Umfang des Innendorns (7) abstehen und an der Innenbohrung (4) und/oder am Innendorn (7) befestigt sind und daß das eine Ende (16a) des Streifens aus dem Formkörper (3) herausragt und sich vor dem Innendorn (7) befindet.

## Claim

Device for forming a tube (11) having an overlapped longitudinal seam from a flat web (1), comprising a shaping body (3) possessing an internal bore (4) of essentially circular cross-section for supporting the outer surface of the formed tube (14) in the region of mutual overlap of the edge zones (6) of the web (1) and an essentially cylindrical internal mandrel (7) for supporting the inner surface of the formed tube (14), with at least a part length of the internal mandrel (7) being arranged in the interior of the shaping body (3), and further comprising means for guiding the web edges and maintaining a mutual distance between the web edges, characterized in that said means comprises a flexible strip (5) which has a curved cross-section, with the curvature being adaptable to the circumference of the tube, and which has, along the longitudinal edge zones one or two projecting edge(s) (17a, 17b), that the edge(s) (17a, 17b) extend(s) along a straight line parallel to the direction of movement of the web (1) and project(s) in the direction of the internal bore (4) and/or of the circumference of the internal mandrel (7) and is/are fastened to the internal bore (4) and/or to the internal mandrel (7), and that one end (16a) of the strip (5) projects from the shaping body (3) and is located ahead of the internal mandrel (7).

## Revendication

Dispositif pour fabriquer un tube (11) à partir d'une bande plate (1) avec formation d'un joint longitudinal à recouvrement, qui comprend un corps de mise en forme (3) possédant un perçage intérieur (4) de forme à peu près circulaire à section, qui sert à donner appui extérieurement au tube (14) mis en forme dans la région du recouvrement mutuel des zones marginales (6) de la bande (1), et un mandrin intérieur (7), de forme à peu près cylindrique à base circulaire, disposé au moins sur une partie de sa longueur à l'intérieur du corps de mise en forme (3), destiné à donner un appui intérieur au tube (14) mis en forme, ainsi qu'un moyen servant à guider les bords de la bande et à les maintenir espacés, caractérisé en ce que ce moyen est constitué par une lame flexible (5), que cette lame présente en section une forme cintrée, qui peut être adaptée par sa courbure à la circonférence du tube, et présente un ou deux bords rabattus (17a, 17b) le long de ses côtés longitudinaux, en ce que le bord ou les bords (17a, 17b) s'étend(ent) en ligne droite, parallèlement à la direction de l'avance de la bande (1) et fait ou font saillie vers le perçage intérieur (4) et/ou vers la périphérie du mandrin intérieur (7), et sont fixés au perçage intérieur (4) et/ou au mandrin intérieur (7) et en ce que l'une des extrémités (16a) de la lame émerge au-delà du corps de mise en forme (3) et se trouve en amont du mandrin intérieur (7).

Fig. 1

0 080 120

Fig. 2a

Fig. 2b

Fig. 2c

Fig. 3

**Fig. 4**

**Fig. 4a**

3

Fig. 5   Fig. 5a

Fig. 6   Fig. 6a

Fig. 7   Fig. 7a

4